# EUROPEAN PATENT APPLICATION

(11) **EP 4 814 717 A1**
(43) Date of publication of application: **30.09.2026**
(21) Application number: 25166508.9
(22) Date of filing: 27.03.2025
(51) Int. Cl.: G06F 9/50, H04L 41/5051

(54) **METHOD FOR DESIGNATING A FURTHER DEPLOYMENT TARGET FOR A COMPUTE WORKLOAD**

(71) Applicant: Deutsche Telekom AG, 53113 Bonn (DE)
(72) Inventor: ERKENS, Holger, 53424 Remagen (DE)
(74) Representative: Vossius & Partner Patentanwälte Rechtsanwälte mbB

(57) **Abstract**

The disclosure provides a method for designating a further deployment target for an Al compute workload serving an Al requesting endpoint, preferably utilizing unused capacity on a server running NT (network technology) workloads, the method comprising: receiving a request for an Al service with a defined quality of service (QoS) requirement from the Al requesting endpoint; determining that none of a plurality of deployment targets are running the Al service und fulfil the defined QoS requirement; selecting the further deployment target, wherein the further deployment target is different to each of the plurality of deployment targets running the Al service and having sufficient capacity not used by NT workloads; sending a request to the further deployment target to deploy the Al service; and sending to the Al requesting endpoint information to reconfigure a target for the specific Al service to the further deployment target.

## Description

The present disclosure relates to a method for designating a further deployment target for an Al (artificial intelligence) service (which may be consisting of Al compute workloads serving Al requesting endpoints), a corresponding computer program and a corresponding data processing apparatus.

There is an issue arising with the topic of Al-RAN (artificial intelligence radio access network) or distributed Al (artificial intelligence). Communication networks and attached OTTs (over the top) will need to cover hundreds of Al-augmented use cases. While OTTs utilize private or public clouds for AI computation (particularly AI model inferencing) and make results available via the internet, network operators may leverage Al compute capabilities in their network either to fulfill use case-dependent KPIs (such as latency or throughput) or to utilize unused compute capacity.

Compute capacity distributed in network operators' networks is generally under-utilized since it needs to fulfil rigid availability/redundancy requirements and NT (network technology) workloads (e.g. RAN DU (distributed unit), CU (centralized unit) or 5G core control and user plane functions) scale poorly due to the session/flow-based nature of network traffic. In other words, an NT workload with running sessions needs to be prepared to immediately process traffic even if no traffic is transmitted currently or for a while, holding back sufficient compute capacity. Moreover, sufficient overcapacity (i.e. additional free compute capacity) for infrastructure failures is required which is deployed as backup capacity in the failure case - if one server malfunctions, another one needs to take over traffic immediately. Network traffic is of varying intensity over the day, thus more compute resources are required during the busy hour than during night. Al workloads are more like IT (information technology) workloads with less stickiness to underlying hardware and much shorter deployment and elimination (after demand end) times.

The demand on Al compute capacity will grow over the coming years. While GPUs (graphic processing units) and NPUs (neural processing units) will take care of heavy workload computation (e.g. model training), even standard CPUs (central processing units; with or without additional Al accelerator blocks) will be able to compute less demanding Al workloads for predictive Al or inferencing of large language models. The unutilized compute capacity per server at the various locations of the network could be used to compute Al requests. Due to the large amount of expected different Al workloads with highly dynamic demand forecast over time of the day and week, clarity on location of workload deployment and workload size is missing today, just like the knowledge about the non-utilized compute capacity in the network. It is therefore advantageous for network operators to utilize compute capacity distributed in their networks and benefit from available capacity and short distance to Al requesting endpoints while knowledge about available capacity and best Al workload distribution is required in that case.

The above-mentioned disadvantages are at least partly overcome and/or advantages mentioned herein are at least partly achieved with the features of the independent claims. Dependent claims define preferred embodiments of the present disclosure.

The present disclosure shows a method for designating a further deployment target for an Al compute workload serving an Al requesting endpoint, a corresponding computer program and a corresponding data processing apparatus. Examples, alternatives, advantages and other explanations for these overlapping features are generally only explained once but also apply to the other embodiments.

The Al compute workload is an example of a workload with the behavior of typical IT workloads (which are usually stateless workloads which may be deployed for a short period of time only). The process described herein could as well be applied to other IT workloads besides pure Al workloads, meaning workloads without any Al part, or workloads with an Al part and another part without Al.

For simplicity, the description and figures use terminology for the (pure) Al application case. This disclosure shall also comprise the partial Al case and the no Al case. In these cases, the terms may be amended by deleting "Al" from the terms. Examples of this are: Al compute workload is amended to compute workload; Al requesting endpoint is amended to requesting endpoint; Al service is amended to service; Al application register is amended to application register; Al compute resource register is amended to compute resource register; Al compute profile is amended to compute profile; and so on.

The present disclosure relates to a method for designating a further deployment target for an Al compute workload serving an Al requesting endpoint, the method comprising: receiving a request for an Al service with a defined quality of service (QoS) requirement from the Al requesting endpoint; determining that none of a plurality of deployment targets are running the Al service and fulfil the defined QoS requirement; selecting the further deployment target, wherein the further deployment target is different to each of the plurality of deployment targets running the Al service; sending a request to the further deployment target to deploy the Al service; and sending to the Al requesting endpoint information to reconfigure a target for the specific Al service to the further deployment target.

An Al service may be determined by an instance of the related AI workload being deployed on a server to serve the needs of Al requesting endpoints. The Al service may comprise the Al compute workload serving the Al requesting endpoint.

With this method, additional computational resources (further deployment target) can be added only when needed. This reduces costs, energy consumption and optimizes computational tasks/services delivery to where they are best deployed. The datacenters for pure use for Al services are preferably centralized. However, this may lead to longer paths and hence longer delays and latencies. Instead of setting up new datacenters for pure use for Al services somewhere in the field, where the paths to the user (Al requesting endpoint) may be shorter, hardware for network workloads may be used according to the disclosed method. This hardware for network workloads is already well distributed in the field. Therefore, shorter paths, delays and latencies may be achieved. In addition, the described approach may reduce the need of additional servers to be deployed since unused capacity of the servers (to compute network workloads) is utilized for Al compute workloads.

The plurality of deployment targets may be all deployments targets (like servers) which may be requested to compute services. The plurality of deployment targets may comprise some deployment target which already run services (for example NT workloads and/or Al workloads), and other deployment targets which currently do not run any services. The deployment targets which already run services may be fully at capacity or may still have capacity for further/other services. The further deployment target, which is used to deploy the Al service requested by the Al requesting endpoint, may be one of the other deployment targets which currently do not run any services or it may be a deployment target which already runs services but still has sufficient capacity. In case the currently deployed workload needs to be extended, another instance could be deployed at the same site (deployment target).

The Al requesting endpoint may be a device, like a user device, which requests performance of a specific Al service. This may happen via an application or some other software.

Various embodiments may preferably implement the following features.

Preferably, the further deployment target is a server, wherein the Al requesting endpoint is a mobile network device or a fixed network device, and wherein the method is implemented by a datacenter. The method may be implemented in a datacenter and/or using a datacenter. Such a datacenter could comprise a single server or a multitude of servers and connecting data center equipment (e.g. switches/routers). It could be a central datacenter or located at an edge site (e.g. RAN site, fixed network termination or network aggregation site).

A datacenter may run the AI-WOF (artificial intelligence workload orchestration function). The datacenter (possibly) running the AI-WOF may be a different datacenter than a datacenter where the Al workloads (may) run on. The method may be implemented by an orchestration logic of the AI-WOF. The method may be implemented by at least one server (including one processor; and/or by one processor) of the datacenter. The datacenter may be a central datacenter.

Preferably, the defined QoS requirement is at least one criterium of response latency and number of requests per time unit.

A further alternative is required throughput (for e.g. multimodal Al models like video-assisted personal assistants). This may be a throughput of data in the connection. The term "response" may be meant as response to an Al inferencing request.

Preferably, the method further comprises: sending a request for information on all running services on the plurality of deployment targets to an Al application register; receiving information on all running services on the plurality of deployment targets from the Al application register; wherein the determination that none of the plurality of deployment targets are running the Al service und fulfil the defined QoS requirement is based on the information on all running services on the plurality of deployment targets from the Al application register.

Preferably, the method further comprises: sending a request for information on at least one of the plurality of deployment targets which has capacity to run the Al service to an Al compute resource register; and receiving the information on the at least one of the plurality of deployment targets which has capacity to run the Al service from the Al compute resource register.

The orchestration logic of the AI-WOF may send a request for information to each (or one or some) of the plurality of deployment targets to analyze free capacity (of the corresponding deployment target).

Preferably, the at least one of the plurality of deployment targets which has capacity to run the Al service is at least one of the plurality of deployment targets which is in a same area as the Al requesting endpoint.

Preferably, the method further comprises: sending a request for at least one Al compute profile regarding the Al service to an Al application register; and receiving the at least one Al compute profile from the Al application register.

Preferably, the method further comprises: selecting at least one of the plurality of deployment targets based on the defined QoS requirement and the at least one Al compute profile.

Preferably, the selection of at least one deployment target from the plurality of deployment targets is made from a list where at least one of the plurality of deployment targets has capacity to run the Al service and preferably also fulfils QoS requirements given by the Al application.

Preferably, the method further comprises: sending a request for information on costs to a cost register; and receiving the information on costs from the cost register.

The costs may be costs for the Al requesting endpoint using the further deployment target for the Al service, like running costs.

Preferably, selecting the further deployment target is based on the information on costs.

Preferably, the costs may be at least one of an instance utilization cost, an energy consumption cost, an infrastructure capital expenditure, and a transport network utilization cost.

Preferably, the method further comprises: receiving an acknowledgment that the Al service has been deployed from the further deployment target.

Preferably, the method further comprises: sending an information of the further deployment target having deployed the Al service to an Al application register.

Preferably, the compute workload is an artificial intelligence, Al, compute workload, the requesting endpoint is an Al requesting endpoint, the service is an Al service, and where applicable, the application register is an Al application register, the compute resource register is an Al compute resource register, and the at least one compute profile is at least one Al compute profile.

Preferably, the plurality of deployment targets are already running network workloads.

The word "already" may mean that the plurality of deployment targets run networks workloads at a point of time when the request from the requesting endpoint is received or at a point of time when it is determined that none of the plurality of deployment targets are running the service and fulfil the QoS requirement. In embodiments, the further deployment target may also be selected from the plurality of deployment targets by the (further) criterium of also running network workloads.

In preferred embodiments, the network workloads are more important than the non network workloads. This may mean that the deployment target prioritizes the network workloads over the non network workloads. This may also or alternatively mean that when the further deployment target is determined, it is determined that there are sufficient additional resources to run the requested service without deteriorating the network workloads. The deployment target may prioritize network workload QoSs (see for example also relevant metrics for network functions below) over non network workload QoSs (see for example also relevant infrastructure metrics for Al workloads/ QoS requirements for Al computation below).

Preferably, the further deployment target is selected also based on that running the service will not influence the network workloads running on the further deployment target.

To not influence may mean that the QoS of the network workloads are ensured (not deteriorated). In this manner the QoS of the service and the QoS of the network workload are ensured.

The present disclosure relates to a computer program comprising instructions which, when the program is executed by a computer, cause the computer to carry out the method as described.

The present disclosure relates to a data processing apparatus, preferably a datacenter, comprising a processor configured to perform the method as described. The datacenter may comprise a server comprising the processor. The performed method (software) may run with containerization/Kubernetes or virtualization/OpenStack.

The present disclosure relates to a system comprising the data processing apparatus, the Al requesting endpoint and the further deployment target.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompanied drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows an exemplary deployment process controlled by an AI-WOF.
Fig. 2 shows a diagram of a system for distributing Al workload instances using the Al-WOF.
Fig. 3 shows a flowchart of a method for designating the further deployment target to the Al requesting endpoint.

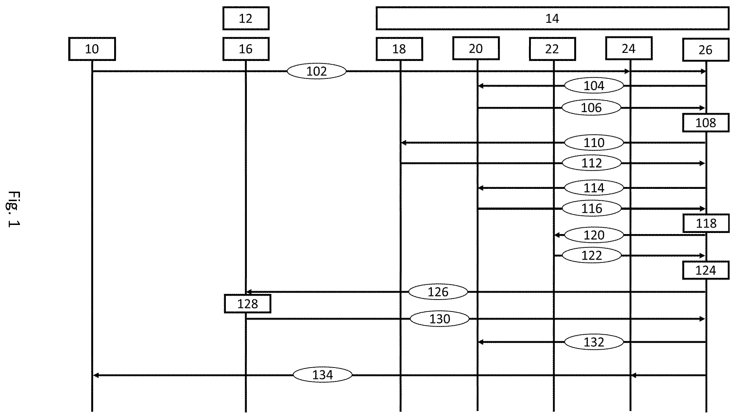

Fig. 1 shows an exemplary deployment process controlled by an AI-WOF 14. The orchestration logic 26 and load balancer 24 of the AI-WOF 14 may execute distribution of Al workload instances in the network (to different Al compute instances) and reconfiguration of Al requesting endpoints 10. The deployment process is exemplary described in this figure, change and elimination may follow similar rules. Fig. 1 shows an Al requesting endpoint 10, a deployment target 12 and an AI-WOF 14.

The Al requesting endpoint 10 may be an Al requesting endpoint device. The Al requesting endpoint 10 may be a user equipment (UE), a mobile network device, a fixed network device, an internet connected device/service, a roaming connected device/service, and/or another device.

The deployment target 12 has installed a node agent 16. The deployment target 12 may be a deployment target device. The deployment target 12 may be one exemplary Al compute instance from a plurality of Al compute instances and/or an exemplary server from a plurality of servers. Deployment targets 12 may be Al compute instances which are preferably servers which may be already used for network functions such as vDU, vCU in radio access networks (RANs), virtualized broadband network gateway (vBNG) in fixed access or user plane function (UPF) or any other component of packet or voice core. Containerization or virtualization of servers may be a prerequisite to further workload onboarding in order to allow the secure shared use of the compute resource. In both cases, a base portion of capacity may be used for the operating system and containerization or virtualization layer (with Kubernetes/Docker and OpenStack as typical examples in these areas). Network functions (or NT workloads) may be the primary reason for the server deployment which are statically sized today with a trend to dynamic sizing in coming years. Dynamic scaling would upscale the network functions during busy hours and downscale them e.g. during the night.

Deployment targets 12 may have compute options like CPUs (which may be supported by Al accelerators), GPUs or tailor-made chips (for example so-called ASICs) which may be optimized for Al inferencing (e.g. like NPUs or LPUs).

The deployment target 12 may be the site where an Al workload instance may be situated. The deployment target 12 may host several Al compute instances (for example being servers). All Al compute instances at this site may share the same network cost.

Some relevant infrastructure metrics for network functions of a deployment target 12 may be at least one of the following three:
First, the number of CPU cores: The number of CPU cores existing on a CPU to execute tasks. Cores may be assigned to specific workloads (NT workload and maybe Al workload instances) either exclusive or for sharing. Network workloads may get exclusive assignment (to one or more specific deployment targets 12) to fulfil QoS (quality of service) requirements. A physical core may be split up in two or more virtual cores which can be assigned to different tasks/services.

Second, memory: The size of RAM (e.g. in Gigabytes) which may be assigned to a specific workload. Memory for network functions may possibly not be shared with other applications.

Third, storage: The size of persistent storage space (e.g. in Gigabytes) which may be required to store the workload software functions and data.

The AI-WOF 14 comprises the following components: The Al compute resource register 18, the Al application register 20, the cost register 22, the load balancer 24 and the orchestration logic 26. The AI-WOF 14 may be installed on a computer, a server, a datacenter (DC), a central datacenter, a cloud, or a public cloud, like OSS or similar services. The hardware on which the AI-WOF 14 runs may be different to the hardware on which the (plurality of) deployment target(s) 12 runs.

The Al compute resource register 18 keeps information on all possible Al compute resources (an Al compute resource may be a deployment target 12 and/or a part of a deployment target 12 or some other compute resource) at all locations in the network where Al tasks could be distributed to by the AI-WOF 14. Each Al compute resource is registered with its currently free resources. The Al compute resource register 18 may be an Al compute resource register unit and/or an Al compute resource register device and/or a memory device and/or a software application running in a container or virtual machine. The Al compute resource register 18 may be updated regularly by requesting status from existing Al compute resources ((possible) deployment targets 12) or by Al compute resources pushing their current status to the Al compute resource register 18.

The Al application register 20 keeps information related to the Al applications (Al services). It may track all deployed Al workload instances per Al application including current average utilization metrics. Moreover, each Al application may have a set of AI compute profiles stored in the Al application register 20 which comprise Al compute requirements definition to fulfil QoS requirements, like response latency, number of requests per time unit. The Al application register 20 may be an Al application register unit and/or an Al application register device and/or a memory device and/or a software application running in a container or virtual machine.

Some relevant infrastructure metrics for Al workload instances may be at least one of the following three:
First, operations per second: The number of operations per second which may be possible to be conducted by the Al processor in use given a specific Al model and model precision (e.g. 32-bit float or 8-bit integer).

Second, memory: The size of RAM (e.g. in Gigabytes) available for the Al model parameters.

Third, memory bandwidth: The bandwidth (e.g. in Gigabytes per second) with which the Al processor can assess or update the memory.

The cost register 22 keeps information about the required cost information on all network and compute elements to calculate the lowest cost of deployment. The cost register 22 may be a cost register unit and/or a cost register device and/or a memory device and/or a software application running in a container or virtual machine.

The load balancer 24 keeps information to determine transport network utilization cost between a location (area) of the Al requesting endpoint 10 and the location of the potentially deployed deployment target 12 (Al workload instance deployed on Al compute instance). Since the described approaches may result in instances of the same Al workload being deployed in very different locations of the network with different reachability, a load balancing function of the AI-WOF 14 may determine transport network utilization cost between areas of Al requesting endpoints 10 and the deployed deployment target 12 (Al workload instance deployed on Al compute instance). This cost may be applied as weighting factor for the AI-WOF's load balancer 24 (see step 124 below), configuring each individual Al requesting endpoint 10 with the optimal target to keep network utilization and congestion low. Required transport network utilization cost could be derived from a pre-trained decision tree (described at another point in this disclosure) additionally or alternatively. QoS requirements with regards to network propagation delay for a newly registered Al requesting endpoint 10 may be checked by the load balancer 24. If not sufficient, the load balancer 24 may trigger the deployment of a new Al workload instance. The load balancer 24 may be a load balancer unit and/or a load balancer device and/or a memory device or a software application running in a container or virtual machine.

The number of deployed Al workload instances may be determined by the decision tree (described at another part of this disclosure). It could result in more or fewer Al workload instances (at more or fewer deployment targets 12 in use for Al workload computation) at different times. AI-WOF's load balancer 24 may reconfigure the deployment of Al requesting endpoints 10 if a workload is shut down. AI requesting endpoints 10 may be connected to existing Al workload instances (at deployment targets 12 already implementing the corresponding Al service) according to mentioned rules.

The orchestration logic 26 is the decision-making unit within the AI-WOF 14. It may receive all updates on deployed deployment targets 12 (and/or Al workload instances), their current average utilization and new Al requesting endpoints 10 registering in the network. Based on this information, the orchestration logic 26 may conduct the deployment of not deployed deployment targets 12 (and/or new Al workload instances on Al compute instances) and may change or may eliminate existing ones. The orchestration logic 26 may be an orchestration logic unit and/or an orchestration logic device and/or a processor and/or a software application running in a container or virtual machine.

A node agent 16 is installed on each of the plurality deployment target 12 (and/or Al compute instance) being orchestrated by the AI-WOF 14. It may measure the current average utilization of the deployment targets 12 (or Al compute instances) and may report metrics to AI-WOF 14. It may determine which workload instances (NT and/or Al workload instances) are currently running on the corresponding deployment target 12. Moreover, it may manage the deployment aspects and communication with AI-WOF 14 in general. The node agent 16 may be a node agent unit and/or a node agent device.

The process of fig. 1 shows several steps. The steps may be performed in the order from top to bottom.

In step 102, an Al requesting endpoint 10 is requesting a specific Al service for a defined QoS requirement. The orchestration logic 26 receives a request for an Al service with defined quality of service (QoS) requirement from the Al requesting endpoint 10. Alternatively, QoS information could be stored as part of the application requirements in the Al application register 20. The request is sent to the load balancer 24 and orchestration logic 26. While requests in operation not comprising the AI-WOF 14 go directly to a selected deployment target 12 (Al compute instance), AI-WOF 14 may be invoked in special cases like insufficient QoS or new service used. In this case, the Al requesting endpoint 10 uses the service for the first time and asks for connection to the best fitting deployment target 12 (Al workload instance on Al compute instance) via the AI-WOF 14. The defined QoS requirement may be pre-defined. The defined QoS requirement may be configurable by the Al requesting endpoint 10 (may be controlled by a user), or it may be stored as further information in the Al application register 20 (may be controlled by an operator). When it is stored as further information in the Al application register 20, the Al requesting endpoint 10 requests a specific Al service and the orchestration logic 26 can find the corresponding defined QoS requirement in the Al application register 20 upon request.

The Al requesting endpoint 10 may request the specific Al service in reaction to different situations. One such situation may be that the currently deployed deployment target 12 (Al workload instance on Al compute instance) is not able to fulfil QoS requirements from a newly requesting Al requesting endpoint 10. A new deployment may support meeting future QoS requirements. Another such situation may be that a currently deployed deployment target 12 (Al workload instance on Al compute instance) is reporting high load values to the AI-WOF 14, crossing a pre-defined threshold (e.g. 90%). Standard Linux processes (e.g. cpustat) may help to derive the current load of a deployed deployment target 12 (Al workload instance on Al compute instance), this information may be transferred via node agents 16 to the AI-WOF 14 to enable either load balancing or deployment of a new Al workload instance. It may be assumed that QoS requirements are constant per Al request. This may make the process simpler and faster to process.

In step 104, the orchestration logic 26 requests information on all running services from the Al application register 20. The orchestration logic 26 sends a request for information on all running services on the plurality of deployment targets to an Al application register 20. All running services may be all services currently running on all deployment targets 12 listed (enlisted to the AI-WOF 14). All running services may be all network functions and all Al services (Al workload instances) serving all Al requesting endpoints 10 listed. In step 106, the Al application register 20 shares information on all running services with the orchestration logic 26. The AI-WOF 14 receives information on all running services on the plurality of deployment targets from the Al application register. The information on all running services may be a list comprising each instance (may be name or numbering) of a running service, the Al requesting endpoint 10 and the deployment target(s) 12 involved.

In step 108, it is determined that none of the deployed instances (in the already running deployment targets 12) fulfils the requested QoS requirement (and may have capacity for the Al service). The orchestration logic 26 determines that none of a plurality of deployment targets are running the Al service und fulfil the defined QoS requirement. Hence, a new Al workload instance needs to be deployed.

If, alternatively, it is determined that at least one deployed instance fulfils the requested QoS requirement, the orchestration logic 26 may inform the Al requesting endpoint 10 (from which the request in step 102 was received) about the at least one deployed instance fulfilling the requested QoS requirements and/or the orchestration logic 26 send to the Al requesting endpoint 10 a signal communicating to reconfigure its target to the at least one deployed instance of Al workload instance fulfilling the requested QoS requirements. This operation could be assisted by the load balancer 24.

In step 110, after step 108, the orchestration logic 26 requests possible deployment targets 12 which have capacity to run the requested (specific) Al service, preferably in the specific area of the Al requesting endpoint 10, from the Al compute resource register 18. Having the capacity to run the requested Al service may be the same as or part of fulfilling the QoS requirements. The orchestration logic 26 sends a request for information on at least one of the plurality of deployment targets which has capacity to run the Al service to an Al compute resource register. In step 112, the Al compute resource register 18 shares at least one and/or a list of deployment targets 12 which have capacity to run the requested (specific) Al service (which have enough free resources). The orchestration logic 26 receives the information on the at least one of the plurality of deployment targets which has capacity to run the Al service from the Al compute resource register 18.

In step 114, after steps 110 and 112, the orchestration logic 26 requests Al compute profiles for the application (the requested specific Al service) from the Al application register 20. The Al application register 20 may keep profiles for the Al workload which disclose requirements of the workload on the underlying Al compute instance to fulfill Al service requirements (e.g. number of tokens/second). Different profiles (e.g. need for number of cores of a CPU or time slots of a GPU) match QoS requirements with different variants of available hardware. This information may be required to compute QoS (function of compute resources available and network propagation to specific deployment target). The orchestration logic 26 sends a request for at least one Al compute profile regarding the Al service to an Al application register 20. The request of step 110 and preferably the answer of step 112 may be event based or frequently (after lapse of a time period). In the case of frequent requests (of step 110), the orchestration logic 26 may not additionally send an event based request (of step 110) in each event of an initial request (of step 102). The event based request may be due to an initial request for Al service (of step 102), possibly together with other steps of this method. The case of frequent requests may also be in case of rightsizing. Rightsizing may be checking if compute resources are still needed or can be freed up and processing of various Al workloads may be merged.

In step 116, all Al compute profiles for the specific Al application (requested specific Al service) are shared with the orchestration logic 26 by the Al application register 20. Alternatively, all options with sufficient resources for the specific Al application and in the requested region are shared with the orchestration logic 26. The orchestration logic 26 receives the at least one Al compute profile from the Al application register 20.

In some embodiments, a resource check may take place in steps 110 and 112. The resource check may not be considering a specific Al service, it may just be how many vCPUs, RAM, etc. are available. In steps 114 and 116, profiles may be shared which include information about number of vCPUs, RAM, etc. required for a certain Al QoS. Free resources may be matched with the profiles and a selection of a server with sufficient resources for deployment of the Al workload which meets Al QoS demands can take place. The profiles may be static information (fed into the database once) while the resources may change over time.

In step 118, the orchestration logic 26 performs a pre-selection of possible deployment targets 12 based on the requested QoS requirements. This pre-selection decision may be based on the information received in step 116. The orchestration logic 26 selects at least one of the plurality of deployment targets based on the defined QoS requirement and the at least one Al compute profile. This may (further) reduce a number of possible deployment targets in a group (or list) of previously selected deployment targets.

The pre-selection may be based on required Al capabilities (QoS requirements). Such required Al capabilities may be infrastructure metrics for network functions and/or infrastructure metrics for Al workload instances as described above. Alternative or additional required Al capabilities may be one or more of: Available compute capabilities resources at the deployment target 12 (like CPU cores, TOPS, FLOPS), memory resources at the deployment target 12 and bandwidth (Gigabytes per second (Gbps)) resources at the deployment target 12.

Deployment targets 12 as resources with sufficient Al compute performance and sufficiently low network propagation delay towards requesting Al endpoints 10 are pre-selected by Al-WOF. Orchestration logic 26 filters all possible deployment options for the ones meeting QoS requirements and creates a deployment shortlist.

The residual compute capabilities in terms of general purpose (e.g. CPU) and accelerated (e.g. GPU) computation may be desired to be sufficiently large to enable swift execution of incoming requests. Such QoS requirements for Al computation may be (first to fourth):
First, the response latency, which may be the time between an Al inference request by the Al requesting endpoint 10 and the retrieval of the inferencing result, characterized as time to first token (TTFT). Simplified, this latency may be the sum of network propagation delay (up- and downlink) and Al computation time. It may therefore be a function of available compute resources and proximity to requesting Al endpoints.

Regarding this (response latency), propagation delay follows a certain determinism for each of the different network segments between Al requesting endpoints 10 and deployment target 12 (Al workload instance on Al compute instance). The mobile and fixed connections between user equipment (for example as Al requesting endpoint 10) and the access terminations (for example as access layer 28) add a specific range of possible delay to the network propagation delay. Each segment from there to the core network adds further network propagation delay. Minimizing this sum of delays minimizes the response delay, enhancing quality of service (QoS).

Second, the number of requests per time unit which an Al workload instance can serve. It may be a function of available compute resources and may limit the number of concurrent Al requests from Al requesting endpoints 10 in proximity to still fulfil the response latency requirement.

Third, QoS techniques in IP networks such as traffic prioritization may be additionally applicable.

Fourth, bandwidth for the Al service. This QoS requirement of bandwidth may depend on the kind of Al service requested. A request for a video based Al service may need more bandwidth than a request for a text based Al service.

Another criterium for the pre-selection may be the type of Al application of the deployment target 12 (Al compute instance). Profiling of deployment targets 12 (Al compute instances) for specific Al applications may be done (for example in steps 114 and 116). A resultant Al compute profile comprises an existing hardware (HW) configuration of a deployment target 12 in the network (e.g. a specific CPU-only or GPU-assisted configuration) and the achieved Al compute performance (e.g. time of compute until first token) for that configuration. HW configuration parameters may include number of utilized CPU cores of a specific CPU model, utilized fraction of GPU and/or utilized memory for the Al computation. A set of Al compute profiles may be generated for different HW platforms and different Al workload sizes/QoS requirements.

In step 120, the orchestration logic 26 requests the cost elements to calculate the best option for the pre-selected deployment targets by the cost register 22. The orchestration logic 26 sends a request for information on costs to a cost register 22. In step 122, the cost register 22 shares cost elements for pre-selection with the orchestration logic 26. The orchestration logic 26 receives the information on costs from the cost register 22.

Before step(s) 104, 110, 114 and/or 120, the AI-WOF 14 may receive the currently available free compute capacity per deployment target 12 (server) in the network which is registered for compute capacity sharing. Each deployment target 12 advertises its compute capacity (e.g. as a Kubernetes functionality or a CPU/RAM statistics readout in case of bare-metal deployments) including a cost factor which is a mix of static and dynamic parameters. All AI-compute requesting workloads (from the Al requesting endpoints 10) may be registered at the AI-WOF 14 with information about their deployment capacity demand, their compute infrastructure requirements and scaling increments. Parameters may be exchanged between deployment targets 12 and AI-WOF 14 in fixed time intervals, e.g. every fifteen minutes. The AI-WOF 14 may deploy AI workload instances where cost is lowest (see following steps) and eliminates them when there is no demand, or a redeployment would end up in lower cost.

In step 124, the deployment target 12 with least cost is selected (based on cost calculation criteria described earlier) by the orchestration logic 26 as the deployment target 12 on which the new Al workload instance is run. The AI-WOF selects the further deployment target (the new deployment target on which the Al service of the Al requesting endpoint 10 will run), wherein the further deployment target is different to each of the plurality of deployment targets (already previously) running the Al service. This may select one possible deployment target in a group (or list) of previously selected deployment targets.

Regarding steps 120 to 124, the cost-based deployment target selection may be based on calculated costs.

The costs and capabilities of a deployment target 12 as potential Al compute site may be determined based on at least one of the following factors (first to fourth):
First, a cloud instance utilization cost. This metric may be calculated by cost initiated public cloud instance for the Al workload x (times) average instance uptime per year (for example in €/year). The cloud instance utilization cost may refer to the use of public cloud instances as deployment target 12. The usual metric may be cost per predefined number of CPU cores and Gigabytes of RAM.

Second, an energy consumption cost. This metric may be calculated by energy unit cost x average energy consumption of compute (incl. PUE - power usage effectiveness, which may be a factor describing the additional energy required on top of energy for compute, e.g. for cooling) for a fraction used for an Al workload x average uptime of the Al workload per year (for example in €/year). The energy consumption cost may refer to the consumed energy of the compute dedicated to processing the Al workload instance. Energy consumption may be different for various site types with related PUE factors. Local energy cost in the geographical area may differentiate this cost as well.

Third, an infrastructure capital expenditure. This metric may be calculated by acquisition, maintenance, and deployment cost for infrastructure x average fraction used for an Al workload / infrastructure deployment period in years (for example in €/years). The capital expenditure of infrastructure may need to be considered in a case where additional infrastructure has been deployed just for Al computation. It may be calculated as acquisition, maintenance and deployment cost over the deployment period divided by assumed number of Al requests during that period. If the infrastructure has been deployed to compute the NT workload, this cost factor can be avoided.

Fourth, a transport network utilization cost. This metric may be calculated by synthetic link usage cost per year x link capacity / average link usage for Al workload (for example in €/year). Other than the costs before, this cost may not directly be attributable to a specific infrastructure. Thus, a synthetic cost factor may be required which may be balanced against infrastructure costs. The average bandwidth consumed by the Al workload may be the scaling factor here. An Al generated video may require more bandwidth than a text answer from a chat bot and particularly the bandwidth intensive case should be computed close to the requester to keep transport cost low. To account for probable congestion, a low bandwidth link would have a higher cost of utilization than a high bandwidth link.

Further influencing factors may exist.

In step 126, the orchestration logic 26 demands (request) the node agent 16 on the selected (selected in step 124) deployment target 12 (may be the same as the "further deployment target") to execute deployment and activation of the Al workload function. The orchestration logic 26 sends a request to the further deployment target to deploy the Al service.

In step 128, the node agent 16 of the deployment target 12 deploys the Al workload instance.

In step 130, after successful deployment, the node agent 16 reports the deployment and activation to the orchestration logic 26. The orchestration logic 26 receives an acknowledgment that the Al service has been deployed from the further deployment target.

In step 132, the orchestration logic 26 updates the Al application register 20 with the newly deployed service. The orchestration logic 26 sends an information of the further deployment target having deployed the Al service to an Al application register. Alternatively, the node agent 16 could directly sent information to the Al application register 20 after deployment or as part of a regular update of the Al application register 20.

In step 134, the orchestration logic 26 sends to the Al requesting endpoint 10 a signal communicating to reconfigure target to newly deployed Al workload instance (of the selected deployment target 12). The orchestration logic 26 sends to the Al requesting endpoint information to reconfigure a target for the specific Al service to the further deployment target. The Al requesting endpoint 134 receives the reconfiguration to direct requests to the new Al workload instance while the orchestration logic 26 informs the endpoint about the service being ready for use. Step 134 may be performed after or at the same time as step 132. In alternatives, it is possible that step 134 is performed before step 132 or that load balancer 24 performs the reconfiguration signaling.

The process described may have an optimization target which may be to utilize the compute capacity of the network rather than public cloud capacity which may be perceived as back-up resource in case of more capacity requested than currently available (compute capacity of the different kinds of deployment targets 12). To achieve this behavior, public cloud capacity cost may be assumed to be highest (= high cloud instance utilization cost). Two embodiments for optimized distribution of workloads in the network are presented now.

Embodiment 1: An initial Al workload instance (the "Al workload anchor") may be deployed in a pre-defined location with sufficient compute resources regardless of day of time, number of Al requests and location of Al requesters. Most suitable deployment targets may be central datacenters or public cloud while deployment targets such as cell or aggregation site may be fully utilized during busy hour. Workload capacity utilization data (e.g. CPU and GPU utilization) may be measured on the deployment target 12 (via the node agent 16) and sent back as analytics data to the AI-WOF 14. The AI-WOF 14 may trigger the deployment of a new instance at the site with lowest calculated cost as soon as a certain utilization threshold (e.g. 90%) on all formerly deployed Al workload instances (of the deployments targets 12) within QoS coverage is exceeded.

Embodiment 2: A pre-trained decision tree may have output parameters such as the workload size and deployment target 12 (e.g. a specific cell site) of an Al workload based on various input parameters such as time of the day/year and current server utilization (of the deployment targets 12). Further possible input parameters are number of Al requests and location of Al requesting endpoints 10. The model for the decision tree may be trained based on the described inputs to deliver the described outputs. AI-WOF 14 deploys new Al workload instances based on the result of the decision tree.

Different to embodiment 1, even initial workloads can be placed anywhere in the network now, driving a better compute capacity utilization.

Both embodiments may be combined for improved performance during the whole orchestration lifecycle. This may be defined in two phases:
First, early operation and model training: embodiment 1 is implemented and operated first for a pre-defined period (e.g. weeks or months). While the Al workload anchor is running, the input data for training the decision tree model may be gathered. The model may be initially trained with these input data.

Second, model-assisted operation: embodiment 2 may be applied afterwards, resulting in workload-placement based on the pre-trained decision tree. To overcome stochastic imprecision of the model or deviations, AI-WOF 14 may still monitor workload capacity utilization and deploys further Al workload instances on a central site if the pre-defined utilization threshold is exceeded everywhere. Further data may be captured during operation and the decision tree model may be re-trained after enough additional data has been gathered.

The Al workload anchor (embodiment 1) may be set up to handle a pre-defined number of Al inference requests at pre-defined minimum QoS (and/or location dependent QoS) before a new Al workload instance deployment is required. The AI-WOF 14 may deploy a new instance of an Al workload in case of an extension request which may be derived by the orchestration logic 26 of the AI-WOF 14. Reasons triggering an extension request may be the same as described for step 102 (current Al workload instance not able to fulfil QoS requirements, or current Al workload instance is reporting high load).

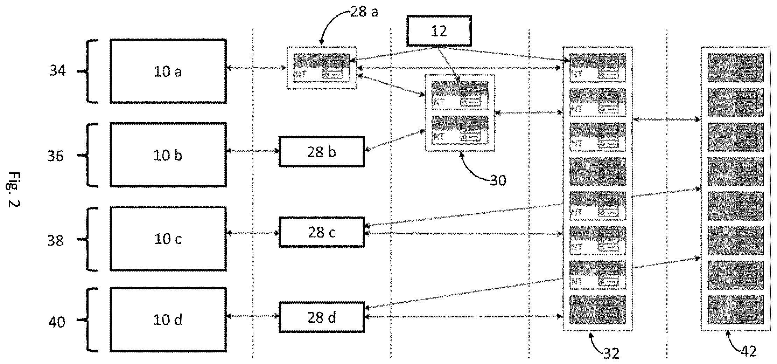

Fig. 2 shows a diagram of a system for distributing Al workload instances using the AI-WOF 14. The system comprises four exemplary Al requesting endpoints 10, an Access layer 28 to the operator network, an aggregation site 30 in the operator network, a central datacenter 32 on which the AI-WOF 14 is running, and a public cloud 42. The system shows four different connection paths for the four different Al requesting endpoints 10.

The Al requesting endpoint 10 requests an Al service (Al workload instance on Al compute instance). The Al requesting endpoint 10 may be one Al requesting endpoint 10 or a bundle of endpoints, some of which requesting Al services and other possibly not requesting Al services. The Al service is requested by the Al requesting endpoint 10 to the access layer 28. The access layer 28 sends the request to the aggregation site 30 if present. Otherwise, the request is directly sent to the central datacenter 32. If the aggregation site 30 is present, the request may be sent via the aggregation site 30 and then from there further to the central datacenter 32. The central datacenter 32 has the AI-WOF 14 loaded onto it. The central datacenter 32 may host components of a packet core network function, for example an AMF (access and mobility management function) or UPF. The AI-WOF 14 distributes the Al service (Al workload instance on Al compute instance) to deployment targets, like the public cloud 42. The public cloud 42 may be one or more servers. The deployment target 12 may be (a part of/a server of/a processor or) any one of access layer 28a, aggregation site 30, central datacenter 32 and/or public cloud 42. Connections are shown by the straight arrows.

In a first connection path 34 (path "a", first embodiment), the Al requesting endpoint 10 (10a) is a mobile network device, like a user equipment (UE). The access layer 28 (28a) is a vCU (virtual centralized unit) or vDU (virtual distributed unit)- The aggregation site 30 is a vBNG (virtual broadband network gateway). public cloud 42 offering Al compute capabilities may also send these offers to the aggregation site 30.

In a second connection path 36 (path "b", second embodiment), the Al requesting endpoint 10 (10b) is a fixed network device, like a computer. The access layer 28 (28b) is a fixed line network terminal. The aggregation site 30 is a vBNG. Public cloud 42 offering Al compute capabilities may also send these offers to the aggregation site 30.

In a third connection path 38 (path "c", third embodiment), the Al requesting endpoint 10 (10c) is an internet connected device or an internet connected service. The access layer 28 (28c) is the internet. The access layer 28 may connect to the central datacenter 32 and/or to the public cloud 42.

In a fourth connection path 40 (path "d", fourth embodiment), the Al requesting endpoint 10 (10d) is a roaming connected device or a roaming connected service. The access layer 28 (28d) is one or more roaming networks. The access layer 28 may connect to the central datacenter 32 and/or to the public cloud 42.

Fig. 2 shows a diagram showing Al requesting endpoints 10 and datacenter 32 locations exposing capacity for AI workloads (gray area in fig. 2) on top of NT workload processing (white area in corresponding boxes in fig. 2), including usual connection paths between locations. Besides public cloud 42, compute locations (deployment target 12) could be either central datacenters, aggregation sites or cell sites which are all private on-premise clouds of the network operator. Having low general purpose compute capacity currently, capacity may grow in coming years due to deployment of virtualized RAN, virtual BNG (broadband network gateway) or distributed UPF (user plane function). It may be advantageous to allow for local breakout of the traffic by implementing UPF (5G core user plane functions which are handover points for 5G traffic to and from the internet) at the specific site.

Each shown connection path may be a different embodiment. AI requesting endpoints 10 are connected to cell sites (for example via wireless LTE or 5G) or aggregation sites (for example connected via fixed line network termination). AI requesting endpoints 10 could also request services via the internet 28c or roaming networks 28d, others are located inside the network (for Al-assisted network operations). Equipment in scope for Al requesting endpoints 10 include phones, tablets, loT equipment, client PCs and workloads on servers inside or outside the operator network, besides other possible Al requesting endpoints 10.

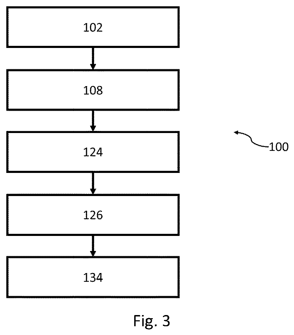

Fig. 3 shows a flowchart of a method 100 for designating the further deployment target 12 to the Al requesting endpoint 10. The method may be implemented by a processor and/or the orchestration logic 26 of the AI-WOF 14.

The method 100 for designating a further deployment target 10 to an Al requesting endpoint 12, the method 100 comprises several steps. In step 102, a request for an Al service with a defined quality of service, QoS, requirement is received from the Al requesting endpoint. In step 108, it is determined that none of a plurality of deployment targets are running the Al service und fulfil the defined QoS requirement. In step 124, the further deployment target is selected, wherein the further deployment target is different to each of the plurality of deployment targets running the Al service. In step 126, a request is sent to the further deployment target to deploy the Al service. In step 134, information is sent to the Al requesting endpoint, the information is to reconfigure a target for the specific Al service to the further deployment target.

Further steps can be comprised by method 100. Such further steps may be the steps shown in and described for fig. 1.

Al requesting endpoints may mean: All devices in the network which could demand an Al service from one of the deployed Al workloads orchestrated by the Al-WOF. (Al requesting) endpoints may be realized by a client software (e.g. an app on a smartphone) which connects to an Al workload instance in the network for computation of the Al-specific task.

Al application may mean: The framework of a specific Al application, consisting of the software parts on the Al requesting endpoint and the Al workload instance.

AI workload instances may mean: Instances of a specific Al workload which is requested by the Al requesting endpoints.

AI compute instance may mean: The hardware entities in the network which may be available for deployment of Al workload instances on them. Preferred entities are servers used for network functions with unused capacity.

AI compute profile may mean: A characterization of required compute resources to achieve a pre-defined Al compute performance. Various profiles may be generated for different configurations and performance requirements.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for designating a further deployment target for a compute workload serving a requesting endpoint, the method comprising:
receiving a request for a service with a defined quality of service, QoS, requirement from the requesting endpoint;
determining that none of a plurality of deployment targets are running the service and fulfil the defined QoS requirement;
selecting the further deployment target, wherein the further deployment target is different to each of the plurality of deployment targets running the service;
sending a request to the further deployment target to deploy the service; and
sending, to the requesting endpoint, information to reconfigure a target for the specific service to the further deployment target.

2. Method of claim 1, wherein the further deployment target is a server, wherein the requesting endpoint is a mobile network device or a fixed network device, and wherein the method is implemented by a datacenter.

3. Method of claim 1 or 2, wherein the defined QoS requirement is at least one criterium of response latency, number of requests per time unit, required throughput, size of RAM and memory bandwidth.

4. Method of any of claims 1 to 3, further comprising:
sending a request for information on all running services on the plurality of deployment targets to an application register; and
receiving information on all running services on the plurality of deployment targets from the application register;
wherein the determination that none of the plurality of deployment targets are running the service und fulfil the defined QoS requirement is based on the information on all running services on the plurality of deployment targets from the application register.

5. Method of any of claims 1 to 4. further comprising:
sending a request for information on at least one of the plurality of deployment targets which has capacity to run the service to a compute resource register; and
receiving the information on the at least one of the plurality of deployment targets which has capacity to run the service from the compute resource register;
preferably wherein the at least one of the plurality of deployment targets which has capacity to run the service is at least one of the plurality of deployment targets which is in a same area as the requesting endpoint.

6. Method of any of claims 1 to 5, further comprising:
sending a request for at least one compute profile regarding the service to an application register; and
receiving the at least one compute profile from the application register.

7. Method of claim 6, further comprising:
selecting at least one of the plurality of deployment targets based on the defined QoS requirement and the at least one compute profile; and
preferably, when dependent on claim 5, wherein the selection of at least one of the plurality of deployment targets is made from a list of the at least one of the plurality of deployment targets which has capacity to run the service.

8. Method of any of claims 1 to 7, further comprising:
sending a request for information on costs to a cost register; and
receiving the information on costs from the cost register;
preferably wherein selecting the further deployment target is based on the information on costs; and/or
preferably wherein the costs may be at least one of an instance utilization cost, an energy consumption cost, an infrastructure capital expenditure, and a transport network utilization cost.

9. Method of any of claims 1 to 8, further comprising
receiving an acknowledgment that the service has been deployed from the further deployment target.

10. Method of any of claims 1 to 9, further comprising:
sending an information of the further deployment target having deployed the service to an application register.

11. Method of any of claims 1 to 10, wherein the compute workload is an artificial intelligence, Al, compute workload, the requesting endpoint is an Al requesting endpoint, the service is an Al service, and where applicable, the application register is an Al application register, the compute resource register is an Al compute resource register, and the at least one compute profile is at least one Al compute profile.

12. Method of any of claims 1 to 11, wherein the plurality of deployment targets are already running network workloads.

13. Method of claim 12, wherein the further deployment target is selected also based on that running the service will not influence the network workloads running on the further deployment target.

14. A computer program comprising instructions which, when the program is executed by a computer, cause the computer to carry out the method of any of claims 1 to 13.

15. A data processing apparatus, preferably a datacenter, comprising a processor configured to perform the method of any of claims 1 to 13.

## Amended claims

### Amended claims in accordance with Rule 137(2) EPC.

1. A method (100) for designating a further deployment target (12) for a compute workload serving a requesting endpoint, the method (100) comprising:
Receiving (102) a request for a service with a defined quality of service, QoS, requirement from the requesting endpoint;
Determining (108) that none of a plurality of deployment targets (12) are running the service and fulfil the defined QoS requirement;
Selecting (124) the further deployment target (12), wherein the further deployment target (12) is different to each of the plurality of deployment targets (12) running the service;
Sending (126) a request to the further deployment target (12) to deploy the service; and
Sending (134), to the requesting endpoint, information to reconfigure a target for the specific service to the further deployment target (12);
wherein the plurality of deployment targets (12) are already running network workloads.

2. Method (100) of claim 1, wherein the further deployment target (12) is a server, wherein the requesting endpoint is a mobile network device or a fixed network device, and wherein the method (100) is implemented by a datacenter (32).

3. Method (100) of claim 1 or 2, wherein the defined QoS requirement is at least one criterium of response latency, number of requests per time unit, required throughput, size of RAM and memory bandwidth.

4. Method (100) of any of claims 1 to 3, further comprising:
Sending (104) a request for information on all running services on the plurality of deployment targets (12) to an application register; and
Receiving (106) information on all running services on the plurality of deployment targets (12) from the application register;
wherein the determination (108) that none of the plurality of deployment targets (12) are running the service und fulfil the defined QoS requirement is based on the information on all running services on the plurality of deployment targets (12) from the application register.

5. Method (100) of any of claims 1 to 4. further comprising:
Sending (110) a request for information on at least one of the plurality of deployment targets (12) which has capacity to run the service to a compute resource register; and
Receiving (112) the information on the at least one of the plurality of deployment targets (12) which has capacity to run the service from the compute resource register;
preferably wherein the at least one of the plurality of deployment targets (12) which has capacity to run the service is at least one of the plurality of deployment targets (12) which is in a same area as the requesting endpoint.

6. Method (100) of any of claims 1 to 5, further comprising:
Sending (114) a request for at least one compute profile regarding the service to an application register; and
Receiving (116) the at least one compute profile from the application register.

7. Method (100) of claim 6, further comprising:
selecting at least one of the plurality of deployment targets (12) based on the defined QoS requirement and the at least one compute profile; and
preferably, when dependent on claim 5, wherein the selection of at least one of the plurality of deployment targets (12) is made from a list of the at least one of the plurality of deployment targets (12) which has capacity to run the service.

8. Method (100) of any of claims 1 to 7, further comprising:
Sending (120) a request for information on costs to a cost register (22); and
Receiving (122) the information on costs from the cost register (22);
preferably wherein selecting the further deployment target (12) is based on the information on costs; and/or
preferably wherein the costs may be at least one of an instance utilization cost, an energy consumption cost, an infrastructure capital expenditure, and a transport network utilization cost.

9. Method (100) of any of claims 1 to 8, further comprising
Receiving (130) an acknowledgment that the service has been deployed from the further deployment target (12).

10. Method (100) of any of claims 1 to 9, further comprising:
Sending (132) an information of the further deployment target (12) having deployed the service to an application register.

11. Method (100) of any of claims 1 to 10, wherein the compute workload is an artificial intelligence, Al, compute workload, the requesting endpoint is an Al requesting endpoint, the service is an Al service, and where applicable, the application register is an Al application register (20), the compute resource register is an Al compute resource register (18), and the at least one compute profile is at least one Al compute profile.

12. Method (100) of any one of claims 1 to 11, wherein the further deployment target (12) is selected also based on that running the service will not influence the network workloads running on the further deployment target (12).

13. A computer program comprising instructions which, when the program is executed by a computer, cause the computer to carry out the method (100) of any of claims 1 to 12.

14. A system comprising a data processing apparatus, preferably a datacenter (32), comprising a processor, and the system comprising a plurality of deployment targets (12), wherein the system is configured to perform the method (100) of any of claims 1 to 12.
